# EUROPÄISCHE PATENTANMELDUNG

(11) **EP 1 273 891 A1**
(43) Veröffentlichungstag der Anmeldung: **08.01.2003**
(21) Anmeldenummer: 01116432.4
(22) Anmeldetag: 06.07.2001
(51) Int. Cl.: G01F 1/60

(54) **Verfahren zum Betrieb eines magnetischinduktiven Durchflussmessers**

(71) Anmelder: Endress + Hauser Flowtec AG, CH-4153 Reinach BL 1 (CH)
(72) Erfinder:

(57) **Zusammenfassung**

Der Durchflußmesser umfasst einen Durchflußaufnehmer (1) mit einem Meßrohr (11), zwei Spulen (12, 13) und zwei Elektroden (14, 15) sowie eine Bertiebs- Auswerte-Elektronik (2). Das Verfahren dient der möglichst vollständigen Kompensation von Stör-Potentialen, die von induktiven und/oder kapazitiven Einstreuungen durch die Spulen-Zuleitungen und/oder von Fremdstoff-Partikeln bzw. Luftbläschen in der zu messenden Flüssigkeit und/oder von Belägen auf den Elektroden (14, 15) verursacht werden. In den Teil-Periodendauern (T111, T121, T211, T221) des Spulenstroms wird wie üblich das dem Volumendurchfluss proportionale Messsignal (d) berechnet. Einer der Elektroden (14, 15) wird in den Teil-Periodendauern (T112, T122, T212, T222, T312) des Spulenstroms mindestens ein Energie-Impuls (E112, E122, E212, E222, E312; E112', E212', E312') zugeführt.

## Beschreibung

Die Erfindung betrifft ein Verfahren zum Betrieb eines magnetisch-induktiven Durchflußmessers, mit dem der Volumen-Durchfluß einer elektrisch leitenden und strömenden Flüssigkeit zu messen ist.

Magnetisch-induktive Durchflußmesser umfassen üblicherweise einen Durchflußaufnehmer, eine Betriebs-Elektronik und eine Auswerte-Elektronik. Im Folgenden wird, falls nötig, der Einfachheit halber nur von Durchflußaufnehmern bzw. Durchflußmessern gesprochen.

Mit magnetisch-induktiven Durchflußmessern läßt sich bekanntlich der Volumen-Durchfluß einer elektrisch leitenden Flüssigkeit messen, die in einer Rohrleitung fließt; es wird also per definitionem das pro Zeiteinheit durch einen Rohrquerschnitt fließende Volumen der Flüssigkeit gemessen.

Der Durchflußaufnehmer hat ein Meßrohr, der in die Rohrleitung flüssigkeitsdicht, z.B. mittels Flanschen oder Verschraubungen, eingesetzt wird. Der die Flüssigkeit berührende Teil des Meßrohrs ist i.a. elektrisch nicht-leitend, damit eine Spannung nicht kurzgeschlossen wird, die nach dem Faraday'schen Induktionsgesetz von einem das Meßrohr durchsetzenden Magnetfeld in der Flüssigkeit induziert wird.

Metall-Meßrohre sind daher üblicherweise innen mit einer elektrisch nicht-leitenden Schicht, z.B. aus Hartgummi, Polyfluorethylen etc., versehen und auch i.a. nichtferromagnetisch; bei vollständig aus einem Kunststoff oder aus einer Keramik, insb. aus Aluminiumoxid-Keramik, bestehenden Meßrohren ist die elektrisch nicht-leitende Schicht demgegenüber nicht erforderlich.

Das Magnetfeld wird mittels zweier Spulenanordnungen erzeugt, von denen im häufigsten Fall jede auf einem gedachten Durchmesser des Meßrohrs von außen an diesem angeordnet ist. Jede Spulenanordnung besteht üblicherweise aus einer Spule ohne Kern oder einer Spule mit einem weichmagnetischen Kern.

Damit das von den Spulen erzeugte Magnetfeld möglichst homogen ist, sind sie im häufigsten und einfachsten Fall identisch zueinander und elektrisch gleichsinnig in Serie geschaltet, sodass sie im Betrieb von demselben Spulenstrom durchflossen werden können. Es ist jedoch auch schon beschrieben worden, die Spulen abwechselnd gleich- bzw. gegensinnig vom selben Spulenstrom durchfließen zu lassen, vgl. die US-A 56 46 353, um dadurch die Viskosität nichtnewton'scher Flüssigkeiten - das sind Flüssigkeiten mit hoher Viskosität - messen zu können.

Der eben erwähnte Spulenstrom wird von einer Betriebs-Elektronik erzeugt; er wird auf einen konstanten Stromwert von z.B. 85 mA geregelt, und seine Stromrichtung wird periodisch umgekehrt; dies verhindert, dass sich an den Elektroden elektrochemische Störspannungen aufbauen. Die Stromrichtungsumkehr wird dadurch erreicht, dass die Spulen in einer sogenannten T-Schaltung oder einer sogenannten H-Schaltung liegen; zur Stromregelung und -richtungsumkehr vgl. die US-A 44 10 926 oder die US-A 60 31 740.

Die erwähnte induzierte Spannung entsteht zwischen mindestens zwei galvanischen, also von der Flüssigkeit benetzten, oder zwischen mindestens zwei kapazitiven, also z.B. innerhalb der Rohrwand des Meßrohrs angeordneten, Elektroden, wobei jede Elektrode für sich ein Potential abgreift.

Im häufigsten Fall sind die Elektroden diametral einander gegenüberliegend so angeordnet, dass ihr gemeinsamer Durchmesser senkrecht zur Richtung des Magnetfelds und somit senkrecht zum Durchmesser ist, auf dem die Spulenanordnungen liegen. Die induzierte Spannung wird verstärkt und mittels einer Auswerte-Elektronik zu einem Messsignal aufbereitet, das registriert, angezeigt oder seinerseits weiterverarbeitet wird.

Das Potential an jeder Elektrode ist nicht nur vom Magnetfeld aufgrund des Faraday-Gesetzes abhängig - in diese Abhängigkeit gehen die geometrisch/räumlichen Abmessungen des Meßrohrs und die Eigenschaften der Flüssigkeit ein -, sondern diesem auf dem Faraday-Gesetz beruhenden und als möglichst rein erwünschten Nutz-Messsignal sind Stör-Potentiale verschiedener Genese überlagert.

Im Prinzip ist der Absolutwert des Potentials an der jeweiligen Elektrode für die Messung des VolumenDurchflusses ohne Bedeutung, allerdings nur unter der Voraussetzung, dass einerseits die Potentiale im Aussteuerbereich eines auf die Elektroden folgenden Differenzverstärkers liegen, d.h. also dass dieser Verstärker von den Potentialen nicht übersteuert werden darf, und dass andererseits sich die Frequenz von Potentialänderungen wesentlich von der Frequenz der erwähnten Stromrichtungsumkehr unterscheidet.

Ein erstes der erwähnten Stör-Potentiale stammt von induktiven und/oder kapazitiven Einstreuungen, die von den Spulenanordnungen und deren Zuleitungen ausgehen und die elektrische Ladung desjenigen Kondensators ändern, der an der Grenzschicht zwischen der Elektrode und der Flüssigkeit existiert. Aufgrund von Unsymmetrien im konkreten Aufbau des Durchflußaufnehmers, insb. was die Leitungsführung zu den Spulenanordnungen und den Elektroden angeht, weicht i.a. das Stör-Potential der einen Elektrode vom Stör-Potential der anderen Elektrode ab.

Dieser - erste - Effekt kann einerseits zu einer Begrenzung der Dynamik des erwähnten Differenzverstärkers führen. Andererseits unterliegt der Wert der vom Stör-Potential jeder Elektrode bedingten Stör-Potentialdifferenz Exemplarstreuungen aufgrund von Fertigungstoleranzen der Durchflußaufnehmer. Auch ist die feststellbare Abhängigkeit der Potentiale der Elektroden von der Geschwindigkeit der Flüssigkeit zum Teil auf diesen Effekt zurückzuführen, da bei kleinen Geschwindigkeiten die erwähnten Ladungen an der Grenzschicht zwischen Elektrode und Flüssigkeit von dieser nicht ausgeräumt werden.

Ein zweites der erwähnten Stör-Potentiale stammt von Partikeln eines Fremdstoffs oder von Luftbläschen, die von der Flüssigkeit mitgeführt werden und die, wenn sie auf eine Elektrode auftreffen, plötzliche Änderungen von deren Potential bewirken. Die Abklingzeit dieser Änderungen ist von der Art der Flüssigkeit abhängig und auf jeden Fall größer als die Anstiegszeit der Änderungen.

Auch dieser - zweite - Effekt führt zu einem gestörten Nutz-Messsignal. Der dadurch bedingte Fehler ist zudem vom Potential der Elektrode abhängig. Da dieses aber - wie oben schon erläutert wurde - Exemplarstreuungen aufweist, tritt der zweite Effekt zum ersten Effekt hinzu, sodass die einzelnen Exemplare des Durchflußaufnehmers sehr unterschiedliches Verhalten zeigen, was natürlich äußerst unerwünscht ist.

Ein drittes der erwähnten Stör-Potentiale ist durch Beläge auf den Elektroden bedingt, die von der Flüssigkeit dort ablagert werden. Die Bildung der Beläge ist sehr stark von der Geschwindigkeit der Flüssigkeit abhängig. Die Unterschiede im Verhalten der einzelnen Exemplare der Durchflußaufnehmer werden durch die Belagsbildung noch weiter vergrößert.

Es ist eine Aufgabe der Erfindung, ein Verfahren anzugeben, mit dem die erwähnten Stör-Potentiale möglichst vollständig kompensiert werden können.

Zur Lösung dieser Aufgabe besteht die Erfindung in einem Verfahren zum Betrieb eines magnetisch-induktiven Durchflußmessers, mit dem der Volumendurchfluß einer elektrisch leitenden und strömenden Flüssigkeit zu messen ist, mit einem Durchflußaufnehmer, der umfasst:
- ein Meßrohr für die strömende Flüssigkeit,
   -- von dem ein die Flüssigkeit berührendes Innenteil elektrisch nicht-leitend ist und
   -- das eine Rohrwand aufweist,
- eine am Meßrohr angeordnete erste Spulenanordnung mit einer ersten Spule,
- eine am Meßrohr angeordnete zweite Spulenanordnung mit einer zweiten Spule, welche Spulenanordnungen
   -- auf einem ersten Durchmesser des Meßrohrs liegen und
   -- der Erzeugung eines die Rohrwand und die Flüssigkeit durchsetzenden Magnetfelds dienen, wenn in der ersten Spule ein erster Spulenstrom und in der zweiten Spule ein zweiter Spulenstrom fließt, welche Spulenströme derart periodisch umgeschaltet werden, dass
      --- sie während einer ersten Phase jeweils in einer ersten Stromrichtung,
      --- während einer auf die erste Phase folgenden zweiten Phase jeweils in einer zur Stromrichtung umgekehrten Gegenrichtung,
      --- während einer auf die zweite Phase folgenden dritten Phase jeweils wieder in der ersten Stromrichtung und
      --- während einer auf die dritte Phase folgenden vierten Phase jeweils wieder in der Gegenrichtung fließen u.s.w,
- eine an einer Innenseite der Rohrwand oder in der Rohrwand angeordnete, dem Abgriff eines vom Magnetfeld induzierten ersten Potentials dienende erste Elektrode,
- eine an einer Innenseite der Rohrwand oder in der Rohrwand angeordnete, dem Abgriff eines vom Magnetfeld induzierten zweiten Potentials dienende zweite Elektrode,
wobei
- aus einer während einer ersten Teil-Periodendauer der ersten Phase des Spulenstroms gebildeten ersten Differenz der beiden Potentiale und aus einer während einer ersten Teil-Periodendauer der zweiten Phase des Spulenstroms gebildeten zweiten Differenz der beiden Potentiale sowie aus einer während einer ersten Teil-Periodendauer der dritten Phase des Spulenstroms gebildeten dritten Differenz der beiden Potentiale und aus einer während einer ersten Teil-Periodendauer der vierten Phase des Spulenstroms gebildeten vierten Differenz der beiden Potentiale u.s.w. ein dem Volumendurchfluss der Flüssigkeit proportionales Messsignal berechnet wird und
- mindestens einer der beiden Elektroden während einer zweiten Teil-Periodendauer mindestens einer der Phasen des Spulenstroms mindestens ein Energie-Impuls zugeführt wird,
   -- dessen Dauer höchstens gleich der zweiten Teil-Periodendauer ist.

Nach einer ersten bevorzugten Ausgestaltung der Erfindung hat der Energie-Impuls in der ersten Phase des Spulenstroms eine erste Polarität und in dessen zweiter Phase eine zur ersten Polarität entgegengesetzte Polarität.

Nach einer zweiten bevorzugten Ausgestaltung der Erfindung hat der Energie-Impuls in der ersten und in der zweiten Phase des Spulenstroms die erste Polarität sowie in dessen dritter und vierter Phase die zur ersten Polarität entgegengesetzte Polarität u.s.w.

Nach einer dritten bevorzugten Ausgestaltung, die auch bei der ersten oder der zweiten Ausgestaltung angewendet werden kann, wird beiden Elektroden ein Energie-Impuls zugeführt.

Nach einer vierten bevorzugten Ausgestaltung, die auch bei der ersten, zweiten oder dritten Ausgestaltung angewendet werden kann, wird der Energie-Impuls dadurch erzeugt, dass eine einseitig an einem Schaltungsnullpunkt liegende elektrische Gleichenergiequelle kurzzeitig mit der Elektrode verbunden wird.

Nach einer ersten bevorzugten Ausgestaltung der vierten Ausgestaltung ist die Gleichenergiequelle eine Gleichspannungsquelle mit möglichst kleinem Innenwiderstand.

Nach einer zweiten bevorzugten Ausgestaltung der vierten Ausgestaltung ist die Gleichenergiequelle eine Gleichstromquelle mit möglichst großem Innenwiderstand.

Nach einer weiteren Ausgestaltung der Erfindung, die auch bei den bisher erwähnten Ausgestaltungen angewandt werden kann, werden mehrere aufeinander folgende Energie-Impulse während mindestens einer der Teil-Periodendauern zugeführt und diese Energie-Impulse haben unterschiedliche Amplituden.

Nach einer anderen weiteren Ausgestaltung der Erfindung, die auch bei den bisher erwähnten Ausgestaltungen angewandt werden kann, werden mehrere aufeinander folgende Energie-Impulse während mindestens einer der Teil-Periodendauern zugeführt und diese Energie-Impulse dauern unterschiedlich lang.

Nach noch einer weiteren Ausgestaltung der Erfindung, die auch bei den bisher erwähnten Ausgestaltungen angewandt werden kann, sind die Energie-Impulse rechteck-, dreieck-, trapez- oder sinus-förmig.

Ein Vorteil der Erfindung besteht darin, dass sowohl die auf den induktiv/kapazitiven Einstreuungen als auch auf den von der Flüssigkeit mitgeführten Fremdstoff-Partikeln und/oder Luftbläschen als auch die auf der Bildung von Elektroden-Belägen beruhenden Stör-Potentiale gezielt vermindert oder sogar vollständig kompensiert werden können, sodass die breite Streuung der Fertigungstoleranzen ebenfalls minimiert und Durchflußaufnehmer mit von Exemplar zu Exemplar einheitlichem Verhalten hergestellt werden können.

Das Verfahren der Erfindung und weitere Vorteile werden nun anhand von in den Figuren der Zeichnung dargestellten Zeitdiagrammen und schematisierten Schaltbildern eines magnetisch-induktiven Durchflußmessers näher erläutert.
- Fig. 1: zeigt schematisch und teilweise in der Form eines Blockschaltbilds einen für den Ablauf des Verfahrens der Erfindung geeigneten magnetischinduktiven Durchflußmesser,
- Fig. 2a: zeigt ein Zeitdiagramm des periodisch umgeschalteten und zu unterschiedlichen Phasen in den Spulen fließenden Spulenstroms,
- Fig. 2b: zeigt ein Zeitdiagramm des vom Spulenstrom nach Fig. 2 induzierten Potentials an einer der beiden Elektroden mit mehreren dieser Elektrode nach einer Ausgestaltung des Verfahrens der Erfindung zugeführten Doppel-Energie-Impulsen der einen Polarität, gefolgt von Doppel-Energie-Impulsen der anderen Polarität, und
- Fig. 2c: zeigt ein Zeitdiagramm des vom Spulenstrom nach Fig. 2 induzierten Potentials an einer der beiden Elektroden mit mehreren dieser Elektrode nach einer anderen Ausgestaltung des Verfahrens der Erfindung zugeführten Einfach-Energie-Impulsen der einen Polarität, gefolgt von Einfach-Energie-Impulsen der anderen Polarität.

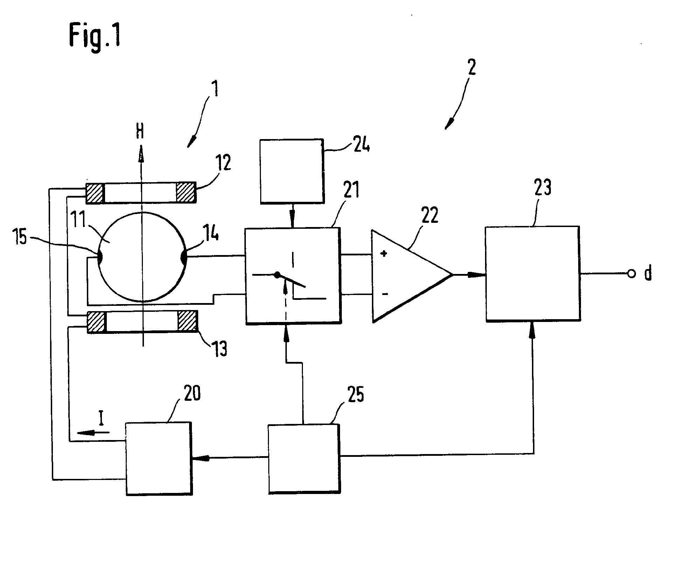

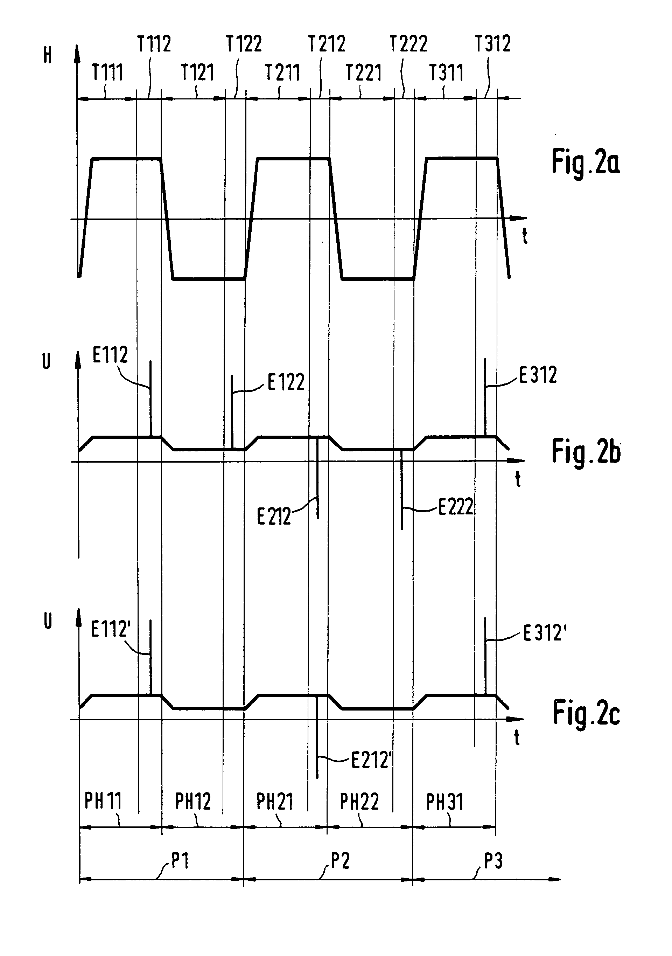

In Fig. 1 ist schematisch und teilweise in der Form eines Blockschaltbilds ein für den Ablauf des Verfahrens der Erfindung geeigneter magnetisch-induktiver Durchflußmesser, mit dem der Volumendurchfluß einer elektrisch leitenden und strömenden Flüssigkeit zu messen ist, und in Fig. 2 sind Zeitdiagramme von im Betrieb auftretenden Größen dargestellt. Die Fig. 1 und 2 werden nicht nacheinander, sondern zusammen erläutert.

Der Durchflußaufmesser, mit dem das Verfahren der Erfindung ausgeführt werden kann, umfasst einen Durchflußaufnehmer 1 und eine Betriebs- und Auswerte-Elektronik 2. Zum Durchflußaufnehmer 1 gehört ein Meßrohr 11, das eine Rohrwand aufweist und durch das im Betrieb die zu messende Flüssigkeit strömt. Ein die Flüssigkeit berührendes Innenteil des Meßrohrs 11 ist elektrisch nicht-leitend, damit, wenn dies nicht so wäre, die von dem erwähnten Magnetfeld induzierte Spannung nicht kurzgeschlossen wird.

Metall-Meßrohre sind daher üblicherweise innen mit einer elektrisch nicht-leitenden Schicht, z.B. aus Hartgummi, Polyfluorethylen etc., versehen und auch i.a. nichtferromagnetisch; bei vollständig aus einem Kunststoff oder aus einer Keramik, insb. aus Aluminiumoxid-Keramik, bestehenden Meßrohren ist die elektrisch nichtleitende Schicht demgegenüber nicht erforderlich.

Eine am Meßrohr 11 angeordnete erste Spulenanordnung weist eine erste Spule 12 und eine am Meßrohr 11 angeordnete zweite Spulenanordnung eine zweite Spule 13 auf. Die Spulenanordnungen liegen auf einem ersten Durchmesser des Meßrohrs 11 und dienen im Betrieb der Erzeugung eines die Rohrwand und die Flüssigkeit durchsetzenden Magnetfelds H. Dieses entsteht, wenn in der Spule 12 ein erster Spulenstrom und in der Spule 13 ein zweiter Spulenstrom fließt.

In Fig. 1 ist vorausgesetzt, dass die Spulenanordnungen keinen Kern enthalten, also sogenannte Luftspulen sind. Meist sind die Spulen jedoch um einen Kern gewickelt, der i.a. weichmagnetisch ist, wobei die Kerne mit Polschuhen zusammenwirken können, vgl. z.B. die US-A 55 40 103.

In Fig. 1 ist der übliche Fall dargestellt, dass die beiden Spulen 12, 13 gleichsinnig in Serie geschaltet sind und in ihnen derselbe Spulenstrom I fließt, sodass das Magnetfeld H homogen ist. Es ist jedoch auch schon beschrieben worden, die Spulen abwechselnd gleich- bzw. gegensinnig vom selben Spulenstrom durchfließen zu lassen, um dadurch die Viskosität nicht-newton'scher Flüssigkeiten messen zu können, vgl. die US-A 56 46 353.

Meistens ist der Spulenstrom I ein Gleichstrom; der Spulenstrom I kann jedoch auch ein, insb. sinus- oder dreieck-förmiger, Wechselstrom sein. Der Spulenstrom I wird von einem Spulenstromgenerator und -umpoler 20 erzeugt und, wenn er ein Gleichstrom ist, auf einen konstanten Wert geregelt sowie derart periodisch umgeschaltet, dass er die Spulen 12, 13 während einer ersten Phase PH1 (vgl. Fig. 2c) jeweils in einer ersten Stromrichtung und während einer auf die erste Phase folgenden zweiten Phase PH12 jeweils in einer zur ersten Stromrichtung umgekehrten Gegenrichtung durchfließt, vgl. zu Stromregelung und - umpolung z.B. die US-A 44 10 926 oder die US-A 60 31 740.

Auf die zweite Phase PH12 folgt eine dritte Phase PH21, während der der Spulenstrom I wieder in der ersten Stromrichtung fließt. Auf die dritte Phase folgt eine vierte Phase PH22, während der der Spulenstrom I wieder in der Gegenrichtung fließt. Darauf folgt eine entsprechende Phase PH31 u.s.w. Bezüglich der Umkehrung der Richtung des Spulenstroms I bilden jeweils zwei der aufeinanderfolgenden Phasen eine Umschaltperiode P1 P2, P3 u.s.w.

Eine an einer Innenseite der Rohrwand des Meßrohrs 11 angeordnete Elektrode 14 dient dem Abgriff eines vom Magnetfeld H induzierten ersten Potentials U. Eine in der gleichen Weise angeordnete zweite Elektrode 15 dient dem Abgriff eines vom Magnetfeld H induzierten zweiten Potentials.

In Fig. 1 sind die Elektroden 14, 15 galvanische Elektroden, die also die Flüssigkeit berühren. Es können jedoch auch mindestens zwei kapazitive, also z.B. innerhalb der Rohrwand des Meßrohrs 11 angeordnete, Elektroden verwendet werden. Jede Elektrode greift für sich ein elektrisches Potential ab, das im Betrieb aufgrund des Faraday-Gesetzes in der Flüssigkeit vorhanden ist.

Die Betriebs-und Auswerte-Elektronik 2 umfasst einen Umschalter, der für jede Elektrode einen Umschalt-Kontaktsatz haben muss. Da In Fig. 2 zwei Elektroden 14, 15 vorhanden sind hat der entsprechende Umschalter 21 zwei Umschalt-Kontaktsätze, die allerdings nicht einzeln dargestellt, sondern lediglich mittels des Umschalter-Symbols wiedergegeben sind.

In der in Fig. 1 eingezeichneten Stellung des Umschalters 21 sind die Elektroden 14, 15 mit einem invertierenden bzw. nicht-invertierenden Eingang eines Differenzverstärkers 22 verbunden. Somit wird die Differenz der beiden von den Elektroden 14, 15 abgegriffenen Potentiale gebildet. Aus dieser Differenz berechnet eine Auswerte-Elektronik 23 in üblicher Weise, z.B. durch periodische Abtastung und Zwischenspeicherung - vgl. z.B. die US-A 43 82 387, die US-A 44 22 337 oder die US-A 47 04 908, ein dem Volumendurchfluss der Flüssigkeit proportionales Messsignal d.

Die in Fig. 1 eingezeichnete Stellung des Umschalters 21 ist immer während einer ersten Teil-Periodendauer T111 der ersten Phase PH11 des Spulenstroms I, während einer ersten Teil-Periodendauer T121 der zweiten Phase PH12 des Spulenstroms I, während einer ersten Teil-Periodendauer T211 der dritten Phase PH21 des Spulenstroms I, während einer ersten Teil-Periodendauer T221 der vierten Phase PH22 des Spulenstroms I und während einer ersten Teil-Periodendauer T311 einer fünften Phase PH31 des Spulenstroms I vorhanden, vgl. die Fig. 2a und 2c.

Die Steuerung des Umschalters 21 nimmt eine Ablaufsteuerung 25 vor; einer ihrer Ausgänge ist mit dem Steuer-Eingang des Umschalters 21 verbunden. Ein weiterer Ausgang des Umschalters 21 ist mit einem Steuer-Eingang des Spulenstromgenerator und -umpolers 20 verbunden und noch ein weiterer Ausgang mit der Auswerte-Elektronik 23. Zur Ablaufsteuerung 25 gehört ein Taktgenerator.

In der in Fig. 1 nicht eingezeichneten, anderen Stellung des Umschalters 21 ist mindestens eine der beiden Elektroden 14, 15 mit einem Energie-Impuls-Generator 24 verbunden. Diese andere Stellung des Umschalters 21 ist während einer zweiten Teil-Periodendauer T112, T122, T212, T222, T312 mindestens einer der Phasen PH11, PH12, PH21, PH22, PH31 des Spulenstroms I vorhanden, sodass mindestens einer Elektrode mindestens ein Energie-Impuls zugeführt wird, dessen Dauer im Vergleich zur zweiten Teil-Periodendauer z.B. wie dargestellt kurz ist, aber maximalt auch so lange wie diese Teil-Periodendauer sein kann.

Zum Zuführen eines Energie-Impulses zu der betroffenen Elektrode gehört im Sinne der Erfindung auch, dass diese Elektrode an einen Schaltungsnullpunkt des Durchflußaufmessers, insb. an einen Schaltungsnullpunkt des Durchflußaufnehmers, gelegt wird. Oder mit anderen Worten: Das Zuführen eines Energie-Impulses zu der betroffenen Elektrode umfasst auch, dass von dieser Energie momentan abgeführt wird.

In Fig. 2b ist eine der vielen Möglichkeiten der zeitlichen Abfolge der Zufuhr der Energie-Impulse an eine der Elektroden 14, 15 dargestellt. In den Teil-Periodendauern T112, T122, T312 wird ein jeweiliger positiver Energie-Impuls E112, E122, E312 zugeführt. In den Teil-Periodendauern T212, T222 wird ein jeweiliger negativer Energie-Impuls E212, E222, E312 zugeführt.

Bezüglich der Umschaltperiode P1 stellen die positiven Energie-Impulse E112, E122 und die beiden bezüglich der Umschaltperiode P2 negativen Energie-Impulse E212, E222, die jeweils während der beiden einander entgegengesetzten Stromrichtungen des Spulenstrom I einwirken, einen jeweiligen Doppel-Energie-Impuls dar.

In Fig. 2c ist eine andere der Möglichkeiten der zeitlichen Abfolge der Zufuhr der Energie-Impulse an eine der Elektroden 14, 15 dargestellt. In den Teil-Periodendauern T112, T312 wird ein jeweiliger positiver Energie-Impuls E112', E312' zugeführt. In der Teil-Periodendauer T212 wird ein negativer Energie-Impuls E212' zugeführt. Diese Energie-Impulse sind Einzel-Energie-Impulse. In Fig. 2c wird nur während der einen Stromrichtung des Spulenstroms I abwechselnd ein positiver und ein negativer Energie-Impuls zugeführt.

Es liegt im Rahmen der Erfindung, jede beliebige Kombination der Aufeinanderfolge positiver und/oder negativer Energie-Impulse anzuwenden. So können je nach Bedarf auch weniger Energie-Impulse, als in den Fig. 2b und 2c dargestellt ist zugeführt werden. Weniger bedeutet, dass z.B. nur in jeder fünften oder zehnten Umschaltperiode des Spulenstroms I ein Energie-Impuls zugeführt wird.

In den Fig. 2b und 2c sind die Energie-Impulse zwar als Nadelimpulse dargestellt, ihre Form kann jedoch auch rechteck-, dreieck-, trapez- oder sinus-förmig sein. Ferner brauchen die Energie-Impulse nicht wie dargestellt dauernd von gleicher Amplitude zu sein, vielmehr kann diese von Energie-Impuls zu Energie-Impuls variieren. Auch die Periodendauer der Energie-Impulse braucht nicht konstant zu sein, sondern kann veränderlich sein, wobei sie natürlich höchstens so groß wie die zweite Teil-Periodendauer sein darf.

Der Energie-Impuls-Generator 24 ist bevorzugt eine einseitig an einem Schaltungsnullpunkt liegende elektrische Gleichenergiequelle, die kurzzeitig mittels des Umschalters 21 zur entsprechenden Elektrode durchverbunden wird. Die Gleichenergiequelle ist bevorzugt eine Gleichstromquelle mit möglichst großem Innenwiderstand.

In den Fig. 2b und 2c ist demgegenüber vorausgesetzt, dass die Gleichenergiequelle als eine einseitig an einem Schaltungsnullpunkt liegende Gleichspannungsquelle mit möglichst kleinem Innenwiderstand ausgebildet ist. In diesem Fall ergibt sich die besonders einfache Möglichkeit, anstatt einer separaten Gleichspannungsquelle die Versorgungsspannungsquelle der Betriebs- und Auswerte-Elektronik 2 zu verwenden; auf eine separate Gleichspannungsquelle kann dann also verzichtet werden.

## Patentansprüche

1. Verfahren zum Betrieb eines magnetisch-induktiven Durchflußmessers, mit dem der Volumendurchfluß einer elektrisch leitenden und strömenden Flüssigkeit zu messen ist, mit einem Durchflußaufnehmer (1), der umfasst:
- ein Meßrohr (11) für die strömende Flüssigkeit,
-- von dem ein die Flüssigkeit berührendes Innenteil elektrisch nicht-leitend ist und
-- das eine Rohrwand aufweist,
- eine am Meßrohr angeordnete erste Spulenanordnung mit einer ersten Spule (12),
- eine am Meßrohr angeordnete zweite Spulenanordnung mit einer zweiten Spule (13), welche Spulenanordnungen
-- auf einem ersten Durchmesser des Meßrohrs (11) liegen und
-- der Erzeugung eines die Rohrwand und die Flüssigkeit durchsetzenden Magnetfelds (H) dienen, wenn in der ersten Spule ein erster Spulenstrom und in der zweiten Spule ein zweiter Spulenstrom fließt, welche Spulenströme derart periodisch umgeschaltet werden, dass
--- sie während einer ersten Phase (PH11) jeweils in einer ersten Stromrichtung,
--- während einer auf die erste Phase folgenden zweiten Phase (PH12) jeweils in einer zur Stromrichtung umgekehrten Gegenrichtung,
--- während einer auf die zweite Phase folgenden dritten Phase (PH21) jeweils wieder in der ersten Stromrichtung und
--- während einer auf die dritte Phase folgenden vierten Phase (PH22) jeweils wieder in der Gegenrichtung fließen u.s.w.,
- eine an einer Innenseite der Rohrwand oder in der Rohrwand angeordnete, dem Abgriff eines vom Magnetfeld induzierten ersten Potentials dienende erste Elektrode (14),
- eine an einer Innenseite der Rohrwand oder in der Rohrwand angeordnete, dem Abgriff eines vom Magnetfeld induzierten zweiten Potentials dienende zweite Elektrode (15),
wobei
- aus einer während einer ersten Teil-Periodendauer (T111) der ersten Phase (PH11) des Spulenstroms gebildeten ersten Differenz der beiden Potentiale und aus einer während einer ersten Teil-Periodendauer (T121) der zweiten Phase (PH12) des Spulenstroms gebildeten zweiten Differenz der beiden Potentiale sowie aus einer während einer ersten Teil-Periodendauer (T211) der dritten Phase (PH21) des Spulenstroms gebildeten dritten Differenz der beiden Potentiale und aus einer während einer ersten Teil-Periodendauer (T221) der vierten Phase (PH22) des Spulenstroms gebildeten vierten Differenz der beiden Potentiale u.s.w. ein dem Volumendurchfluss der Flüssigkeit proportionales Messsignal (d) berechnet wird und
- mindestens einer der beiden Elektroden (14, 15) während einer zweiten Teil-Periodendauer (T112, T122, T212, T222, T312) mindestens einer der Phasen des Spulenstroms mindestens ein Energie-Impuls (E112, E122, E212, E222, E312; E112', E212', E312') zugeführt wird,
-- dessen Dauer höchstens gleich der zweiten Teil-Periodendauer ist.

2. Verfahren nach Anspruch 1, bei dem der Energie-Impuls in der ersten Phase (PH11) des Spulenstroms eine erste Polarität und in dessen zweiter Phase (PH12) eine zur ersten Polarität entgegengesetzte Polarität hat.

3. Verfahren nach Anspruch 1, bei dem der Energie-Impuls in der ersten und in der zweiten Phase (PH11, PH12) des Spulenstroms die erste Polarität sowie in dessen dritter und vierter Phase (PH21, PH22) die zur ersten Polarität entgegengesetzte Polarität hat u.s.w.

4. Verfahren nach einem der Ansprüche 1 bis 3, bei dem der Energie-Impuls beiden Elektroden (14, 15) zugeführt wird.

5. Verfahren nach einem der Ansprüche 1 bis 4, bei dem der Energie-Impuls dadurch erzeugt wird, dass eine einseitig an einem Schaltungsnullpunkt liegende elektrische Gleichenergiequelle kurzzeitig mit der Elektrode verbunden wird.

6. Verfahren nach Anspruch 5, bei dem die Gleichenergiequelle eine Gleichspannungsquelle mit möglichst kleinem Innenwiderstand ist.

7. Verfahren nach Anspruch 5, bei dem die Gleichenergiequelle eine Gleichstromquelle mit möglichst großem Innenwiderstand ist.

8. Verfahren nach einem der Ansprüche 1 bis 7, bei dem mehrere aufeinander folgende Energie-Impulse während mindestens einer der Teil-Periodendauern zugeführt werden und diese Energie-Impulse unterschiedliche Amplituden haben.

9. Verfahren nach einem der Ansprüche 1 bis 8, bei dem mehrere aufeinander folgende Energie-Impulse während mindestens einer der Teil-Periodendauern zugeführt werden und diese Energie-Impulse unterschiedlich lang dauern.

10. Verfahren nach einem der Ansprüche 1 bis 9, bei dem die Energie-Impulse rechteck-, dreieck-, trapez- oder sinus-förmig sind.
